## Europäisches Patentamt
## European Patent Office
## Office européen des brevets

(19)

(11) Veröffentlichungsnummer: **0 115 046**
**B1**

(12) **EUROPÄISCHE PATENTSCHRIFT**

(45) Veröffentlichungstag der Patentschrift:
**10.06.87**

(51) Int. Cl.⁴: **B 60 B 17/00, C 21 D 7/04**

(21) Anmeldenummer: **83112977.0**

(22) Anmeldetag: **22.12.83**

(54) **Eisenbahnrad.**

(30) Priorität: **03.01.83 SE 8300015**

(43) Veröffentlichungstag der Anmeldung:
**08.08.84 Patentblatt 84/32**

(45) Bekanntmachung des Hinweises auf die Patenterteilung:
**10.06.87 Patentblatt 87/24**

(84) Benannte Vertragsstaaten:
**DE FR GB**

(56) Entgegenhaltungen:
**US-A-1 701 976**
**US-A-3 770 595**

(73) Patentinhaber: **ASEA AB, S-721 83 Västeras (SE)**

(72) Erfinder: **Ernerudh, Tore, Stigbergsgatan 2, S-735 00 Surahammar (SE)**
Erfinder: **Hassellöf, Ake, Stationsvägen 1, S-735 00 Surahammar (SE)**
Erfinder: **Lenasson, Carl- Gustav, Bangatan 7, S-735 00 Surahammar (SE)**

(74) Vertreter: **Boecker, Joachim, Dr.- Ing., Rathenauplatz 2-8, D-6000 Frankfurt a.M. 1 (DE)**

EP 0 115 046 B1

## Beschreibung

Die Erfindung betrifft ein Eisenbahnrad gemäß dem Oberbegriff des Anspruches 1. Ein solches Eisenbahnrad ist bekannt aus der US-A-1 701 976.

Bei einem solchen Eisenbahnrad unterliegt die Innenseite des Spurkranzes durch das ständige Gleiten an der Schiene einem starken Verschleiß. Dies gilt sowohl für aus einem Stück hergestellte Eisenbahnräder als auch für solche, bei denen der die Lauffläche und den Spurkranz umfassende Teil in Form eines Ringes oder Reifens auf das Eisenbahnrad aufgeschrumpft ist.

Es ist bereits bekannt, Eisenbahnräder mit warmgehärteten Spurkränzen herzustellen, wobei der gesamte Spurkranz gehärtet wird. Der Nachteil bei solchen Rädern besteht darin, daß beim Warmhärten die Temperaturen von den einzelnen Teilen des Rades unterschiedlich aufgenommen werden, wodurch ein gutes Ergebnis des Härtungsvorganges in Frage gestellt wird. Ein weiteres Problem bei dieser Warmhärtung besteht darin, daß in den Übergangszonen zu den ungehärteten Teilen des Rades leicht Abplatz- und/oder Rißerscheinungen auftreten können. Schließlich hat ein voll durchgehärteter Spurkranz den Nachteil, daß er verhältnismäßig spröde ist und daher leicht beschädigt werden kann.

Aus der US-A-1 701 976 ist ein Eisenbahnrad aus manganhaltigem Stahl bekannt, bei dem der Spurkranz, die Lauffläche und die der Schiene nahe Seitenwand bei einer unter 600° C liegenden Temperatur gehärtet worden sind. Die Härtung von Spurkranz und Lauffläche hat eine geringere Reibung zwischen Lauffläche und Schiene zur Folge.

Der Erfindung liegt die Aufgabe zugrunde, ein Eisenbahnrad der eingangs genannten Art zu entwickeln, welches sich durch einen erheblich reduzierten Verschleiß an den oben genannten kritischen Stellen auszeichnet, bei dem spröde Spurkränze vermieden werden und eine gute Reibung zwischen Lauffläche und Schiene vorhanden ist.

Zur Lösung dieser Aufgabe wird ein Eisenbahnrad nach dem Oberbetriff des Anspruches 1 vorgeschlagen, welches erfindungsgemäß die im kennzeichnenden Teil des Anspruches es genannten Merkmale hat.

Vorteilhafte Ausgestaltungen der Erfindung sind in den Unteransprüchen genannt.

Durch die Erfindung wird ein Eisenbahnrad geschaffen, bei dem der Verschleiß an den obengenannten kritischen Stellen des Rades erheblich reduziert ist. Das Eisenbahnrad gemäß der Erfindung, das grundsätzlich für alle schienengebundenen Fahrzeuge einsetzbar ist, ist insbesondere für Triebfahrzeuge geeignet. Das der Erfindung zugrundeliegende Prinzip kann für alle bei Eisenbahnrädern verwendete Materialarten angewandt werden; vorzugsweise werden für die Eisenbahnräder gemäß der Erfindung jedoch Materialien verwendet, die sich leicht kalthärten lassen. Durch das Kalthärten (unter 600° C) vermeidet man die obengenannten Übergangszonen mit ihren nachteiligen Eigenschaften. Außerdem ist es leichter, ein nicht warmgehärtetes Eisenbahnrad neu zu drehen. Durch Beschränkung der Härtungszone vermeidet man spröde Spurkränze und kann die erforderliche Reibung zwischen Lauffläche und Schiene erhalten.

Als Beispiel für eine geeignete Kalthärtungsmethode kann "peening" (Kugelbestrahlung oder Kalthämmern), Druckpressen, Druckwalzen oder Polierdrücken genannt werden.

Als geeignetes Radmaterial kann beispielsweise sog. Hadfield-Stahl (12-16 %, vorzugsweise ca. 14 % Mn, $\leq$ 0,8 % C, $\leq$ 1,0 % V sowie Zusätze von Ni und Mo) oder niedrig kohlenstoffhaltiger Stahl ($\leq$ 0,10 % C, legiert mit u.a. $\geq$ 1,5 % Cr sowie mit eventuellen Zusätzen an Mn, Ni und/oder Mo) genannt werden.

Die Härte wird hierbei an der Außenfläche am größten und nimmt nach innen hin ab. Die Eindringtiefe für die Härtung bei einem gewöhnlichen Kalthärten kann in Abhängigkeit von der Schlaghärte $\approx$ 1 mm betragen, doch kann man durch Druckwalzen eine Härtedicke bis zu 3 mm erzielen.

Der zu härtende Teil des Rades ist derjenige, der auf der Schiene gleitet. Er erstreckt sich beispielsweise von dem radial äußersten Punkt des Spurkranzes oder nahe von diesem Punkt bis zum Übergang zur Lauffläche.

Die in bezug auf die Schiene nach außen gerichtete Seite des Spurkranzes wird nicht gehärtet, da sonst die Gefahr besteht, daß der Spurkranz beschädigt wird, wenn das Rad beispielsweise durch eine Weiche rollt.

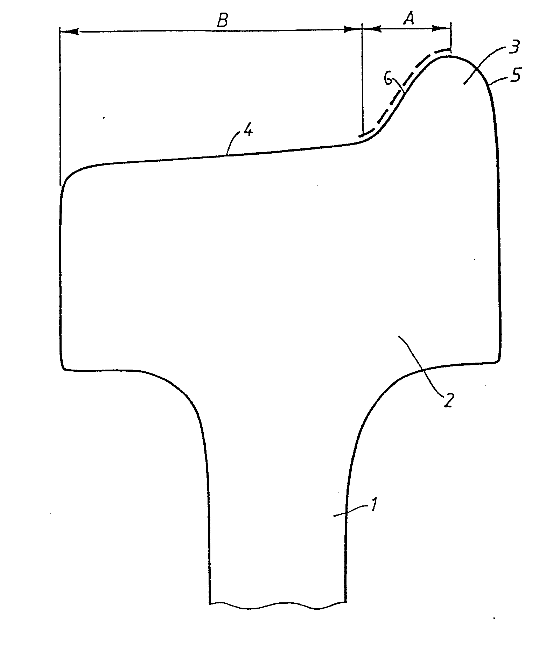

Anhand des in der Figur gezeigten Ausführungsbeispiels soll die Erfindung näher erläutert werden.

Die Figur zeigt einen Teil eines aus einem Stück bestehenden Rades (Vollrad), jedoch kann die Erfindung auch bei einem Rad verwendet werden, bei dem der die Lauffläche und den Spurkranz umfassende äußere radiale Teil aus einem aufgeschrumpften Ring besteht. In der Figur ist die Radscheibe mit 1 bezeichnet und der Radkranz mit 2. Das Rad hat eine Lauffläche 4 und einen Spurkranz 3. Der Abschnitt des Spurkranzes, der sich von der radial äußersten Stelle oder von nahe dieser Stelle bis zum Übergang in die Lauffläche 4 erstreckt (Abschnitt A), ist mittels eines der obengenannten Verfahren kaltgehärtet, also z. B. durch Kugelbestrahlung, Kalthämmern, Druckpressung, Druckwalzen, Polierdrücken oder einer Kombination dieser Verfahren. Die Lauffläche 4 (Strecke B) und die nach außen gerichtete Seite 5 des Spurkranzes 3 sind ungehärtet.

Das Eisenbahnrad gemäß der Erfindung kann für alle Arten von mit Rädern versehenen Schienenfahrzeugen, Lokomotiven, Wagen usw., verwendet werden. Selbstverständlich kann die Strecke A in Abhängigkeit von dem Radprofil verkürzt oder verlängert werden.

## Patentansprüche

1. Eisenbahnrad mit Lauffläche (4) und Spurkranz (3) wobei äußere, dem Verschleiß unterliegende Flächen des Eisenbahnrades bei einer unter 600°C liegenden Temperatur gehärtet worden sind, dadurch gekennzeichnet, daß das Rad aus niedrig kohlenstoffhaltigem Stahl mit ≤ 0,10 % C, ≥ 1,5 % Cr, und eventuellen Zusätzen an Mn, Ni und/oder Mo besteht und daß nur die zur Lauffläche (4) hin gerichtete Seite (6) des Spurkranzes (3) bei einer unter 600°C liegenden Temperatur gehärtet worden ist, während die Lauffläche (4) und die nach außen gerichtete Seite (5) des Spurkranzes (3) ungehärtet sind.

2. Eisenbahnrad nach Anspruch 1, dadurch gekennzeichnet, daß der gehärtete Spurkranzteil (A) mittels "peening" (z. B. Kugelbestrahlung oder Kalthämmern), Druckpressen, Druckwalzen oder Polierdrücken gehärtet worden ist.

3. Eisenbahnrad nach einem der vorhergehenden Ansprüche, dadurch gekennzeichnet, daß die Eindringtiefe der Härtung vorzugsweise etwa 1-3 mm beträgt.

## Claims

1. Railroad car wheel with a running tread (4) and a flange (3), with outer abrasion-exposed surfaces of the railroad car wheel being hardened at a temperature below 600°C, characterized in that the wheel consists of a steel with a low carbon content comprising ≤ 0,10 % C, ≥ 1,5 % Cr, and possible additives of Mn, Ni and/or Mo, and that only that side (6) of the flange (3) which faces towards the running tread (4) has been hardened at a temperature below 600°C, while the running tread (4) and the outwardly facing side (5) of the flanges (3) are unhardened.

2. Railroad car wheel according to Claim 1, characterized in that the hardened portion (A) of the flange has been hardened by peening (for example shot blasting or cold hammering), chasing, pressure-rolling, or presspolishing.

3. Railroad car wheel according to any of the preceding claims, characterized in that the penetration depth of the hardening is preferably about 1 to 3 mm.

## Revendications

1. Roue pour vehicule ferroviaire comportant une surface de roulement (4) et un boudin (3) et dans laquelle des surfaces extérieures soumises à l'usure ont été durcies à une température inférieure à 600°C, caractérisée par le fait que la roue est réalisée en un acier possédant une faible teneur en carbone, avec ≤ 0,10 % C, ≥ 1,5 % Cr, et des additions éventuels de Mn, Ni et/ou Mo, et que seule la face (6) du boudin (3), qui est tournée vers la surface de roulement (4), a été durcie à une température inférieure à 600°C, tandis que la surface de roulement (4) et la face, dirigée vers l'extérieur, du boudin (3) ne sont pas durcies.

2. Roue pour véhicule ferroviaire suivant la revendication 1, caractérisée par le fait que la partie trempée (A) du boudin a été durcie par "peening" (par exemple projection de billes ou martelage à froid), compression, laminage ou polissage sous pression.

3. Roue pour véhicule ferroviaire suivant l'une des revendications précédentes, caractérisée par le fait que la profondeur de pénétration du durcissement est égale de preférence à environ 1-3 mm.